# EUROPÄISCHE PATENTSCHRIFT

(11) **EP 1 323 695 B1**
(45) Veröffentlichungstag und Bekanntmachung des Hinweises auf die Patenterteilung: **28.03.2018**
(21) Anmeldenummer: 02028906.2
(22) Anmeldetag: 23.12.2002
(51) Int. Cl.: C05G 3/08

(54) **Verfahren zur Herstellung von Mineraldüngemitteln**
Process for obtaining mineral fertilizers
Procédé d'obtention des engrais mineraux

(30) Priorität: 24.12.2001 DE 10164103
(43) Veröffentlichungstag der Anmeldung: 02.07.2003
(73) Patentinhaber: EuroChem Agro GmbH, 68165 Mannheim (DE)
(72) Erfinder: Meyer, Bernd, Dr., 69509 Mörlenbach (DE); Rädle, Matthias, Dr., 67273 Welsenheim/Berg (DE); Reuvers, Johannes, Dr., 67591 Hohen-Sülzen (DE); Bühler, Gerd, 67346 Speyer (DE)
(74) Vertreter: Féaux de Lacroix, Stefan

(56) Entgegenhaltungen:
- EP-A- 0 508 191
- US-A- 4 764 200
- US-A- 6 139 596
- DATABASE WPI Section Ch, Week 199216 Derwent Publications Ltd., London, GB; Class A97, AN 1992-129890 XP002249223 & SU 1 661 180 A (DNEPR CHEM TECHN INST), 7. Juli 1991 (1991-07-07)

## Beschreibung

Die Erfindung betrifft ein Verfahren zur Herstellung von Mineraldüngemitteln in Pulver-, Prill-, Kompaktat- oder Granulatform, die Nitrifikationsinhibitoren enthalten, durch Aufbringen einer mindestens einen Nitrifikationsinhibitor enthaltenden Lösung oder Suspension auf Mineraldüngemittel-Pulver, - Prills, - Kompaktate oder -Granulate.

Es ist bekannt, dass ammoniumhaltige Stickstoffdüngemittel im Boden durch Bakterien zu Nitrit und Nitrat umgewandelt werden. Diese Nitrifikation findet, insbesondere in durchlüfteten, neutral bis alkalisch reagierenden Böden verhältnismäßig rasch statt. Wegen seiner großen Beweglichkeit im Boden ist der Nitratstickstoff insbesondere in Gebieten mit hohen Niederschlagsmengen ständig von Auswaschungsverlusten bedroht. Es ist bekannt, zur Verlangsamung der Nitrifikation den ammoniumhaltigen Düngemitteln Nitrifikationsinhibitoren zuzusetzen. Diese Verbindungen können schon in geringen Konzentrationen die Wirkung der im Boden vorhandenen nitrifizierenden Bakterien verlangsamen, so dass das im Boden verhältnismäßig gut haftende Ammonium nur langsam in das zwar von den Pflanzen gut aufnehmbare, aber auch leicht auswaschbare Nitration umgewandelt wird. Solche Nitrifikationsinhibitoren enthaltende Stickstoffdüngemittel zeichnen sich demzufolge durch eine verzögerte Stickstoffzulieferung aus.

Als Nitrifikationsinhibitoren sind bereits eine Reihe von Verbindungen beschrieben worden, wie Dicyandiamid oder Pyrazolverbindungen.

Wichtig ist, dass der Nitrifikationsinhibitor fest mit dem Düngemittel verbunden ist. Die Aufbringung des Nitrifikationsinhibitors auf fertig granulierte Düngemittel hat häufig insbesondere bei DCD den Nachteil, dass der Nitrifikationsinhibitor nicht fest auf der Oberfläche haftet und bei der Handhabung des Düngemittels zu lästigem Abrieb und Stauben führt.

Zudem sind viele Pyrazolverbindungen leicht flüchtig. Dies führt zu hohen Verlusten bei der Aufbringung des Nitrifikationsinhibitors, insbesondere wenn diese bei Temperaturen von bis zu 130°C erfolgt. Auch bei der Aufbringung bei niedrigen Temperaturen oder bei der Lagerung der mit dem Nitrifikationsinhibitor ausgerüsteten Düngemittel ist mit erheblichen Verlusten und damit gleichzeitig mit einer Beeinträchtigung der Umwelt zu rechnen, wenn es nicht gelingt, den Nitrifikationsinhibitor fest auf der Düngemitteloberfläche zu fixieren. Die reine Abmischung von Nitrifikationsinhibitor und Düngemittel reicht für eine feste Fixierung nicht aus.

In der DE-A-41 28 828 sind ammonium- oder harnstoffhaltige Düngemittel und Verfahren zu ihrer Herstellung beschrieben. Die Düngemittel werden mit einem Salz aus 3-Methylpyrazol und einer Säure haftfest überzogen. In einer Sprühvorrichtung oder Mischvorrichtung wie einer Mischtrommel wird eine möglichst konzentrierte wässrige Salzlösung auf das Düngemittel aufgebracht. Nach dem Aufbringen und Fixieren des Salzes kann zusätzlich noch ein Wachs aufgebracht werden, wodurch man einen wirksamen Einschluß des Nitrifikationsinhibitors auch bei längerer Lagerung unter möglicherweise ungünstigen Bedingungen erhält.

3-Methylpyrazol ist extrem flüchtig, übelriechend und mutagen. Daher darf zur Verhinderung zu hoher Verluste 3-Methylpyrazol enthaltendes Düngemittel keinen hohen Temperaturen ausgesetzt werden. Aus diesem Grunde wird das Düngemittel beim Besprühen und beim nachfolgenden Trocknen nur bei niedrigen Temperaturen behandelt. Aufgrund der Hygroskopizität der Basisdünger ist jedoch bei niedrigen Temperaturen häufig keine ausreichende Trocknung zu erzielen. Durch die eingesetzten konzentrierten Lösungen in der Mischtrommel werden teilweise nicht ausreichend homogene Beschichtungen erzielt. Die niedrigen Temperaturen erlauben nur die Versiegelung mit niedrigschmelzenden Wachsen oder Ölen, die in die Poren des Düngemittelgranulates eindringen können und dann eine Verbackung nicht verhindern können.

Aufgabe der vorliegenden Erfindung ist die Bereitstellung eines Verfahrens zur Herstellung von Mineraldüngemitteln in Pulver-, Prill-, Kompaktat- oder Granulatform, die Nitrifikationsinhibitoren enthalten, durch Aufbringen einer mindestens einen Nitrifikationsinhibitor enthaltenden Lösung oder Suspension auf Mineraldüngemittel-Pulver, - Prills,- Kompaktate oder -Granulate, das die Nachteile der bestehenden Verfahren vermeidet. Insbesondere soll das Verfahren kostengünstig sein und eine homogene Verteilung des Nitrifikationsinhibitors auf der Düngemitteloberfläche ermöglichen, ohne dass negative Auswirkungen auf die Produktqualität und auf die Umwelt resultieren.

Die Aufgabe wird erfindungsgemäß gelöst durch ein Verfahren zur Herstellung von Mineraldüngemitteln in Pulver-, Prill-, Kompaktat- oder Granulatform, die Nitrifikationsinhibitoren enthalten, durch Aufbringen einer mindestens einen Nitrifikationsinhibitor der allgemeinen Formel mit der Bedeutung 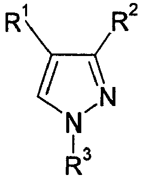
- R¹: Halogenatom oder C₁₋₄ Alkylrest
- R²: C₁₋₄-Alkylrest
- R³: H oder CH₂OH,
oder eines Säureadditionssalzes davon enthaltenden Lösung oder Suspension auf Mineraldüngemittel-Pulver,- Prills,- Kompaktate oder -Granulate, wobei die Lösung oder Suspension maximal 20 Gew.-% des Nitrifikationsinhibitors oder des Säureadditionssalzes davon, bezogen auf die gesamte Lösung oder Suspension, enthält und das Mineraldüngemittel beim Aufbringen eine Temperatur im Bereich von 70 bis 130°C aufweist und die Lösung oder Suspension in einer solchen Menge aufgebracht wird, dass das Mineraldüngemittel 0,01 bis 1,5 Gew.% des Nitrifikationsinhibitors oder des Säureadditionssalzes davon, bezogen auf das Mineraldüngemittel vor dem Aufbringen, enthält.

Eine homogenere Verteilung des Inhibitors auf der Düngemitteloberfläche lässt sich erfindungsgemäß erzielen, wenn an Stelle konzentrierter Inhibitorenlösungen verdünnte Lösungen eingesetzt werden. Das auf das Düngemittel aufgebrachte Lösungsmittel, in der Regel Wasser, wird dabei nachfolgend verdampft, bevor der Dünger eingelagert wird.

Die im erfindungsgemäßen Verfahren einsetzbaren Nitrifikationsinhibitoren sind an sich aus der DE-A-196 31 764 (US6139596A) bekannt. Als Halogenatome werden in der vorstehenden Formel Fluor, Chlor, Brom oder Iod, vorzugsweise Fluor, Chlor oder Brom, insbesondere Chlor eingesetzt.

Besonders bevorzugt sind 3,4-Dimethylpyrazol, 4-Chlor-3-methylpyrazol, N-Hydroxymethyl-3,4-dimethylpyrazol, N-Hydroxymethyl-4-chlor-3-methylpyrazol sowie Säureadditionssalze davon. Als Säure werden insbesondere Mineralsäuren wie Salzsäure, Schwefelsäure oder insbesondere Phosphorsäure eingesetzt. Beispielsweise kann 3,4-Dimethylpyrazol in einer konzentrierten Phosphorsäurelösung eingesetzt werden. Es können jedoch auch Nitrate, Chloride, Sulfate, Salze organischer Säuren wie z.B. Acetate, Oxalate und Polysulfonate aufgebracht werden. Als Säure kann auch die sogenannte NP-Säure verwendet werden, die Phosphorsäure und Salpetersäure enthält und beim Aufschluss von Rohphosphaten mit Salpetersäure (Odda-Prozess) entsteht. Zur Erkennung der Homogenität der inhibierten Dünger kann der Inhibitorlösung auch ein Farbstoff zugesetzt werden. Die bevorzugte Inhibitorformulierung besteht aus einer Lösung von 3,4-Dimethylpyrazolphosphat in konz. Phosphorsäure (ca. 85 %ig) mit einem Farbstoffzusatz. Der Dampfdruck von 3,4-Dimethylphosphat beträgt dabei weniger als 10⁻⁴ mbar. Zudem ist dieser Inhibitor toxikologisch unbedenklich.

Bevorzugt werden die Pyrazolderivate, berechnet als Salz einer Säure, in einer Konzentration von 5 bis 20 Gew.-%, besonders bevorzugt 8 bis 15 Gew.-%, bezogen auf die gesamte Lösung oder Suspension, eingesetzt. Es können auch Gemische zweier oder mehrerer Nitrifikationsinhibitoren erfindungsgemäß eingesetzt werden. Insbesondere werden wässrige Lösungen oder Suspensionen der Nitrifikationsinhibitoren eingesetzt. Es ist vorteilhaft, dass zur Vermeidung negativer Auswirkungen auf die Lagereigenschaften des Düngers nicht zuviel Feuchtigkeit auf dem Dünger verbleibt. Der Wassergehalt des Düngers sollte sich nach der Aufbringung der Inhibitorenlösung und Trocknung des heißen Düngemittels vorzugsweise nicht um mehr als 1,0 %, in der bevorzugten Ausführungsweise höchstens um 0,05 bis 0,3 % erhöhen. Denkbar ist auch, dass der Dünger nach der Inhibitoraufbringung noch leicht erwärmt und nachgetrocknet wird. Dies sollte vorzugsweise bei den schwerflüchtigen Pyrazolderivaten wie z.B. 3,4-Dimethylpyrazol erfolgen.

Da im erfindungsgemäßen Verfahren das Mineraldüngemittel beim Aufbringen, insbesondere Aufsprühen der Nitrifikationsinhibitorlösung oder -suspension eine Temperatur von 70 bis 130 °C, vorzugsweise 87 bis 120 °C, insbesondere 91 bis 120 °C, speziell 100 bis 120°C aufweist, kann in der Regel trotz der höheren Flüssigkeitsmengen auf ein weiteres Erwärmen und Nachtrocknen verzichtet werden. Es ist erfindungsgemäß bevorzugt, beim Aufbringen des Nitrifikationsinhibitors auf das heiße Mineraldüngemittel entstehende Abluft zur Rückgewinnung von Nitrifikationsinhibitor zu behandeln. Dazu kann die beim Aufbringungsprozess entstehende Abluft in geeigneten Abgasreinigungsanlagen wie Zyklonen und/oder Waschkolonnen gereinigt werden. Entstehende Stäube und Waschlösungen können wieder in das Verfahren zurückgeführt werden. Beispielsweise kann die Inhibitoransatzlösung mit dem Waschwasser verdünnt werden und auf die nachfolgend inhibierte Produktion aufgebracht werden.

Die Konzentration des Nitrifikationsinhibitors in der Lösung oder Suspension und die auf das Mineraldüngemittel aufgebrachte Menge werden vorzugsweise so abgestimmt, dass das Mineraldüngemittel 0,01 bis 1,5 Gew.-%, besonders bevorzugt 0,05 bis 0,5 Gew.-% an Nitrifikationsinhibitor, berechnet als Salz, aufweist. Die im Einzelfall eingesetzte Menge kann je nach Lager- und Düngungsbedingungen frei gewählt werden.

Erfindungsgemäß werden Mineraldüngemittel eingesetzt. Dies sind Ammonium oder Harnstoff enthaltende Düngemittel. Als Düngemittel können demnach alle bekannten ammonium- oder harnstoffhaltigen Düngemittel eingesetzt werden. Insbesondere zu nennen sind in diesem Zusammenhang die NPK-Dünger, d.h. Düngemittel, die Stickstoff, Phosphor und Kalium enthalten, Kalkammonsalpeter, d.h. Düngemittel, die noch Ca enthalten, Ammonsulfatsalpeter (allgemeine Formeln (NH₄)₂SO₄ NH₄NO₃), Ammonphosphat und Ammonsulfat. Auch Harnstoff ist einsetzbar, die ammoniumhaltigen Düngemittel sind jedoch bevorzugt.

Diese Düngemittel sind dem Fachmann allgemein bekannt (siehe z.B. Ullmann's Encyclopedia of Industrial Chemistry, 5. Edition, Vol. A 10, 3 23 431, Verlagsgesellschaft, Weinheim, 1987). Die Düngemittel können auch noch weitere Nährstoffe enthalten, wie etwa Magnesium oder Spurennährstoffe. Bevorzugte ammoniumhaltige Düngemittel sind NPK-Düngemittel, Kalkammonsalpeter, Ammonsulfatsalpeter, Ammoniumsulfat oder Ammoniumphosphat. Die erfindungsgemäß behandelten Mineraldüngemittel können in Form von Pulvern, Granulaten, Prills oder Kompaktaten vorliegen.

Erfindungsgemäß kann vor, während oder nach dem Aufbringen der mindestens einen Nitrifikationsinhibitor enthaltenden Lösung oder Suspension das Mineraldüngemittel mit einem Antibackmittel und/oder Versiegelungsmittel behandelt werden. Vorzugsweise wird nach dem Aufbringen der Lösung oder Suspension ein Antibackmittel und/oder Versiegelungmittel mit einem Schmelzpunkt im Bereich von 50 bis 130 °C, vorzugsweise 87 bis 120 °C, insbesondere 91 bis 120 °C, speziell 100 bis 120 °C in geschmolzener Form auf das Mineraldüngemittel aufgebracht, vorzugsweise aufgesprüht. Geeignete Antibackmittel und Versiegelungsmittel sind beispielsweise in DE-A-19 05 834 oder auch DE-A-41 28 828 und DE-A-196 31 764 beschrieben. Geeignete Mittel sind beispielsweise natürliche oder synthetische Wachse wie Polyethylen- und/oder Polypropylenwachs mit einem mittleren Molekulargewicht von 500 bis 10.000 oder auch anorganische oder organische Polysäuren. Als organische Polysäuren können beispielsweise Isopolysäuren oder Heteropolysäuren verwendet werden, insbesondere Polyphosphorsäuren oder Polykieselsäuren. Als organische Polysäuren kommen solche Polymere in Betracht, die eine Mehrzahl von freien Carbonsäuregruppen aufweisen. Dabei kann es sich um Homo- oder Copolymere handeln. Als carboxylgruppenhaltige bzw. carbonsäuregruppenhaltige Monomere kommen insbesondere monoethylisch ungesättigte Mono- oder Dicarbonsäuren mit 3 bis 6 Kohlenstoffatomen oder deren entsprechende Anhydride in Betracht, beispielsweise Acrylsäure, Methacrylsäure, Ethylacrylsäure, Allylessigsäure, Crotonsäure, Vinylessigsäure, Maleinsäure, Itaconsäure, Mesaconsäure, Fumarsäure, Citraconsäure, Methylenmalonsäure sowie deren Ester und Gemische davon. Geeignete Polysäuren sind in der DE-A-196 31 764 näher erläutert.

Geeignete Hüllpolymere sind ferner in EP-A-0 877 722 beschrieben. Dabei kann neben den dort in einer Aufzählung genannten Polymeren insbesondere auf carboxylgruppen-tragende Ethylencopolymerisate hingewiesen werden, bei denen die Carboxylgruppen auch in Form ihrer Salze vorliegen können. Diese carboxylgruppentragenden Ethylencopolymere sind vorzugsweise aufgebaut aus 75 bis 90 Gew.-%, bevorzugt 75 bis 85 Gew.% Ethylen und 10 bis 25 Gew.%, bevorzugt 15 bis 25 Gew.-% einer α-olefinisch ungesättigten C₃ bis C₈-Carbonsäure. Als Carbonsäure kommen insbesondere Acrylsäure, Methacrylsäure, Crotonsäure, Maleinsäure, Fumarsäure oder Itaconsäure sowie Gemische davon in Betracht.

Die Aufbringung der Inhibitorlösung kann sowohl vor und/oder nach einer möglichen Behandlung mit Antibackmittel vorgenommen werden. Wird die Aufbringung des Inhibitors nach der Antibackbehandlung vorgenommen, so kann ein hochschmelzendes Antibackmittel, z.B. ein Wachs, bei hohen Temperaturen auf den Dünger aufgebracht werden. Anschließend soll der Dünger auf die angegebene Temperatur abgekühlt werden. Wird die Antibackmittelbehandlung nach der Inhibitoraufbringung vorgenommen, so können auch niedrig schmelzende Antibackmittel, z.B. eine aminhaltige Formulierung, verwendet werden, um noch eine ausreichend homogene Verteilung des Antibackmittels auf der zumindest teilweise abgekühlten Düngeroberfläche zu erzielen. Besonders vorteilhaft ist es, den Dünger bei hohen Temperaturen mit einem hochschmelzenden Antibackmittel zu behandeln, und vorher oder anschließend die Inhibitorlösung aufzubringen und gegebenenfalls nachher noch eine Nachbehandlung mit einem niedrigschmelzenden Antibackmittel vorzunehmen.

Zur Erzielung einer optimalen Verteilung der Inhibitorenlösung auf der (Granulat)oberfläche ist es von Vorteil, dass die Inhibitorenlösung bei der Aufgabe bereits gut vorverteilt wird. Dies kann erzielt werden, indem die Inhibitorlösung entweder im Zulauf zur Mischvorrichtung, z.B. einer Mischtrommel, oder unmittelbar nach dem Eintritt in die Mischvorrichtung auf das Düngemittel(granulat) aufgedüst wird. Die Verteilung des Inhibitors kann rein optisch sehr leicht erkannt werden, wenn man der Inhibitorlösung vor der Aufbringung einen Farbstoff zusetzt, vorzugsweise in solchen Mengen, dass auf dem Düngemittel 10 bis 1000 g/to vorliegen.

Die Düngemittel liegen bei der Beschichtung vorzugsweise in Granulat- oder Kompaktform vor. Dabei kann die Aufbringung des Nitrifikationsinhibitors in einem Granulationsprozeß unmittelbar nach dem Granulieren erfolgen, beispielsweise in der Trockentrommel oder am Einlauf einer Nachbehandlungstrommel. Ein entsprechendes Granulationsverfahren ist beispielsweise in Ullmann's Encyclopedia of Industrial Chemistry, 5. Edition, Vol. A 10, Seite 378 ff (Verlagsgesellschaft Weinheim, 1987) beschrieben. Hierdurch kann sichergestellt werden, dass sich das Düngemittel nach der Granulation nicht stärker abkühlt und damit ein erneutes Aufheizen des Düngemittels vor dem Aufbringen des Nitrifikationsinhibitors nicht notwendig ist. Der Nitrifikationsinhibitor wird dabei auf das Produkt aufgesprüht, und das Produkt wird zwischen 20 sek. und 20 min. zum Verteilen des Nitrifikationsinhibitors nachgerollt.

Die Verdünnung der Nitrifikationsinhibitorlösung oder -suspension führt zu einer homogenen Verteilung des Inhibitors auf der Düngemitteloberfläche, bevor das Wasser verdampft ist. Falls die im heißen Düngemittel vorhandene Energie nicht ausreicht, um die mit der Inhibitorenlösung eingebrachte zusätzliche Wassermenge weitgehend zu verdampfen, kann noch zusätzliche Heißluft über die mit der Nitrifikationslösung oder - suspension behandelten Granalien geleitet werden. Nach dieser Trocknung kann das noch heiße Düngemittel in der gleichen oder in einer nachgeschalteten Trommel mit dem hochschmelzenden Antibackmittel überzogen und wie üblich weiterverarbeitet werden. Die erfindungsgemäß erhaltenen ammonium- oder harnstoffhaltigen Düngemittel besitzen glatte und abriebarme Oberflächen. Der Energieaufwand im erfindungsgemäßen Verfahren ist im Rahmen des Düngemittelprozesses unbedeutend, insbesondere wenn man die Inhibitorlösung direkt im Produktionsprozess auf bereits erwärmtes Produkt aufbringt.

Die Homogenität der Produkte kann z.B. an der Verteilung des Farbstoffes auf der Granulatoberfläche rein optisch oder mit Hilfe einer "Scanner-Methode" ermittelt werden. Bei der Scannermethode wird auf einen handelsüblichen Scanner eine Monolage des inhibierten und mit Farbmittel versehenen Düngemittels aufgebracht und mit Hilfe bildanalytischer Programme der Bunttonwinkel jedes einzelnen Partikels bestimmt. Über statistische Auswertung zeigt dann die Standardabweichung des Bunttonwinkels gegenüber dem Mittelwert des Bunttonwinkels die Verteilung des Inhibitors an. Die auf diese Weise ermittelte Streuung des mittleren Farbtons (SMH) ist um so geringer, je niedriger die Zahl ist.

Die aufgebrachte Inhibitormenge kann auf jedem Düngemittelkorn einzeln durch eine HPLC-Methode analysiert werden. Dies erlaubt die exakte Bestimmung der auf ein individuelles Düngemittelkorn aufgebrachten Inhibitormengen. Ziel des erfindungsgemäßen Verfahren ist es, auf jedem Korn die gleiche Konzentration zu erreichen, was in der Praxis jedoch kaum möglich ist. Je geringer jedoch die Standardabweichung, bezogen auf den Mittelwert, bei der Konzentration ist, desto besser ist die Gleichmäßigkeit der Verteilung auf dem Düngemittel.

Die Erfindung wird durch die nachstehenden Beispiele näher erläutert.

### Beispiele

Es wurden exemplarisch drei unterschiedliche Düngemittel an drei Orten im technischen Prozess mit Nitrifikationsinhibitor (3,4-Dimethylpyrazolphosphat, 3,4-DMPP) beschichtet.

### Versuch A (Charge A, Vergleich):

In einer diskontinuierlich betriebenen Drehtrommel im 10 t- Maßstab wurde kaltes Ammoniumsulfatsalpeter(ASS)-Düngemittel mit 0,19 % 3,4-DMPP in Form einer grün gefärbten, phosphosäurehaltigen 3,4-DMPP-Lösung mit einem 3,4-DMPP-Gehalt von ca. 34 % ausgerüstet. Die Zugabe der 3,4-DMPP-Lösung erfolgte während der Beschickung der Drehtrommel. Nach einer Nachrollzeit von ca. 5 min. wurde die Trommel entleert, und das Produkt wurde analysiert.

### Versuch B (Charge B, erfindungsgemäß):

Im Zulauf einer kontinuierlich betriebenen Drehtrommel mit einem Durchmesser von ca. 3 m und einer Länge von ca. 16 m wurde auf ca. 100-110°C aufgeheiztes heißes ASS eine gefärbte phosphorsäurehaltige 3,4-DMPP-Lösung mit einem 3,4-DMPP-Gehalt von ca. 13 % aufgebracht.
Der 3,4-DMPP-Gehalt in fertigen Dünger betrug ebenfalls 0,19%.

### Versuch C (Charge C, Vergleich):

Bei diesem Versuch wurde die gleiche Apparatur sowie die gleiche Inhibitorenlösung wie im Versuch A verwendet. Allerdings erfolgte die Aufbringung auf NP-Dünger der Zusammensetzung 25-10-0. Die Inhibitorenmenge auf den ausgerüsteten Dünger betrug 0,18%.

### Versuch D (Charge D, Vergleich):

In einem Labordrehteller wurden 0,18 % 3,4-DMPP in Form einer DMPP/ Polysulfonsäure-Mischung mit einem 3,4-DMPP-Gehalt von ca. 21 % auf kaltes NPK-Düngemittel der Formel 20-10-10 aufgebracht und 5 min. nachgerollt.

### Inhibitorverteilung

Es wurde für jede Charge eine Anzahl von Düngemittelkörnern auf den Gehalt an Nitrifikationsinhibitor durch die HPLC-Methode analysiert. Es wurden dabei der Mittelwert (M), die Standardabweichung (STAB) und das Verhältnis von Standardabweichung zu Mittelwert (STAB/M) ermittelt. Die Ergebnisse sind in der nachstehenden Tabelle 1 zusammengefaßt.

**Tabelle 1: 3,4-DMPP-Gehalte in % (Gew.) des Düngemittels**

| | A | B | C | D |
|---|---|---|---|---|
| **1** | 0,005 | 0,218 | 0,0201 | 0,024 |
| **2** | 0,014 | 0,218 | 0,024 | 0,025 |
| **3** | 0,017 | 0,230 | 0,0263 | 0,027 |
| **4** | 0,017 | 0,231 | 0,0503 | 0,028 |
| **5** | 0,116 | 0,257 | 0,0616 | 0,033 |
| **6** | 0,141 | 0,279 | 0,0627 | 0,036 |
| **7** | 0,144 | 0,320 | 0,0793 | 0,037 |
| **8** | 0,164 | 0,341 | 0,0815 | 0,042 |
| **9** | 0,17 | 0,357 | 0,0835 | 0,078 |
| **10** | 0,172 | 0,523 | 0,0851 | 0,078 |
| **11** | 0,174 | | 0,1193 | 0,088 |
| **12** | 0,178 | | 0,125 | 0,108 |
| **13** | 0,19 | | 0,1534 | 0,138 |
| **14** | 0,195 | | 0,1648 | 0,203 |
| **15** | 0,209 | | 0,2572 | 0,218 |
| **16** | 0,22 | | 0,2807 | |
| **17** | 0,273 | | 0,2881 | |
| **18** | 0,31 | | 0,3071 | |
| **19** | 0,369 | | 0,311 | |
| **20** | 0,398 | | 0,3723 | |
| **21** | 0,426 | | | |
| **22** | 0,688 | | | |
| **M** | 0,209 | 0,298 | 0,148 | 0,078 |
| **STAB** | 0,159 | 0,0947 | 0,113 | 0,064 |
| **STAB/M** | 0,762 | 0,318 | 0,761 | 0,821 |

Aus den Ergebnissen geht hervor, dass das Verhältnis der Standardabweichung zum Mittelwert für die Vergleichsbeschichtungen mehr als doppelt so groß ist im Vergleich zu den erfindungsgemäß beschichteten Düngemittelkörnern (Charge B). Damit ist die Inhibitorverteilung auf dem Düngemittel nach dem erfindungsgemäßen Verfahren wesentlich gleichförmiger als nach den Vergleichsverfahren. Dies zeigt den Vorteil des erfindungsgemäßen Verfahrens.

### Backwert

Literaturbekannt ist ferner eine erhöhte Backneigung eines Düngemittels mit höherem Wassergehalt. Dies trifft auf nach üblichen Verfahren beschichtete Düngemittel zu, die beispielsweise mit wässrigen Lösungen oder Suspensionen von 3,4-Dimethylpyrazolphosphat, Dicyandiamid oder 3-Methylpyrazolphosphat behandelt wurden. Alle diese Aufbringungsformen verursachen nach der Behandlung einen erhöhten Backwert gegenüber den Düngemitteln vor der Behandlung. So zeigen nicht inhibierte Düngemittel des Typs ASS (Ammonsulfat-Salpeter) normalerweise Backwerte um 20 N bis 50 N, je nach Produktionscharge und Lagerungsbedingungen. Bei Produkten, die nach bisherigen Aufbringverfahren inhibiert sind, sind die Backwerte durchweg um etwa 40 N gegenüber dem Wert vor der Aufbringung der Inhibierungslösung erhöht. Wird die Aufbringung jedoch nach dem erfindungsgemäßen Verfahren durchgeführt, so findet keine messbare Erhöhung der Backwerte statt. Es konnten sogar Chargen mit Backwerten von 9 N produziert werden. Dies bedeutet, dass diese Qualitätsgröße gegenüber dem Zustand vor der Behandlung sogar verbessert werden kann.

Die Messung dieser Backwerte erfolgte dabei über eine definierte Druckbelastung über eine definierte Zeit und nachfolgende Messung der notwendigen Kraft zum Abschlagen der verpressten Düngemittel. Die Messung ist realitätsnah, weil in Haufwerken nach der Produktion von Düngemitteln oder in Lagern bis zu der Auslieferung von Düngemitteln ein statischer Druck durch das Haufwerk auf das Düngemittel ausgeübt wird, der am größten ist für die Düngemittel, die bodennah gelagert sind. Typische Höhen dieser Haufwerke liegen zwischen 5 und 15 m. Bei der erfindungsgemäßen Untersuchung wurde die Druckbelastung simuliert, wie sie in einem Haufwerk bei 15 m Schütthöhe auftritt. Diese Druckbelastung wurde auf eine Düngemittelprobe mit kreisförmiger Grundfläche mit einem Durchmesser von 6 cm und einer Höhe von 5 cm ausgeübt. Bei verpackenden Düngemitteln entsteht ein verpresstes Produkt, das nicht mehr zerfällt, sondern zum Zerfall einer Abschlagkraft bedarf. Diese Kraft ist vorstehend in N angegeben.

### Abrieb

Ein Abrieb findet sich häufig am Boden von in Plastikfolie abgesackten und nach bisherigen Verfahren inhibierten Düngemitteln, insbesondere nach mehrfachem Umschlag wieder. Er fällt unangenehm und deutlich sichtbar insbesondere bei durchsichtiger Verpackung auf. Nach visueller Bonitur - einer gängigen Beurteilung von Qualitätsgrößen bei Düngemitteln - wird herkömmlich stabilisiertes ASS in der Regel mit "mittel bis stark abrieb-gefährdet" beurteilt. Die nach dem erfindungsgemäßen Verfahren hergestellten Produkte zeigten bei der Beurteilung eine deutliche Verbesserung. Das Produkt wurde mit "wenig abrieb-gefährdet" beurteilt. Die Messung des Abriebs erfolgte dabei in einer Apparatur, die natürlichen technischen Transportvorgängen nahekommt. Dabei wird in einer Trommel Düngemittel zum Rollen gebracht, und nach dieser Behandlung wird der Abrieb durch eine Aussiebung unterhalb 0,5 mm bestimmt und gravimetrisch bewertet. Eine Einrichtung zur Bestimmung dieses Abriebes ist eine Trommel mit einem Durchmesser von 30 cm, in die 100 g Düngemittel eingefüllt werden. Abriebzeiten liegen beispielsweise bei 60 min.. Nach diesem Verfahren wurde der vorstehend beschriebene Befund erhalten.

Zusammenfassend kann festgestellt werden, dass nach dem erfindungsgemäßen Verfahren hergestellte beschichtete Mineraldüngemittel eine gleichmäßigere Verteilung des Nitrifikationsinhibitors zeigen und zudem eine geringere Verbackungsneigung und Abriebsneigung zeigen. Damit sind sie nach bekannten Verfahren hergestellten beschichteten Mineraldüngemitteln weit überlegen.

## Patentansprüche

1. Verfahren zur Herstellung von Mineraldüngemitteln in Pulver-, Prill-, Kompaktat- oder Granulatform, die Nitrifikationsinhibitoren enthalten, durch Aufbringen einer mindestens einen Nitrifikationsinhibitor der allgemeinen Formel 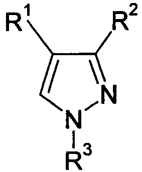 mit der Bedeutung
R¹ Halogenatom oder C₁₋₄ -Alkylrest
R² C₁₋₄-Alkylrest
R³ H oder CH₂OH,
oder eines Säureadditionssalzes davon enthaltenden Lösung oder Suspension auf Mineraldüngemittel-Pulver, -Prills, -Kompaktate oder -Granulate, wobei die Lösung oder Suspension maximal 20 Gew.% des Nitrifikationsinhibitors oder des Säureadditionssalzes davon, bezogen auf die gesamte Lösung oder Suspension, enthält und das Mineraldüngemittel beim Aufbringen eine Temperatur im Bereich von 70 bis 130°C aufweist und die Lösung oder Suspension in einer solchen Menge aufgebracht wird, dass das Mineraldüngemittel 0,01 bis 1,5 Gew.-% des Nitrifikationsinhibitors oder des Säureadditionssalzes davon, bezogen auf das Mineraldüngemittel vor dem Aufbringen, enthält.

2. Verfahren nach Anspruch 1, **dadurch gekennzeichnet, dass** die Lösung oder Suspension zusätzlich einen Farbstoff enthält.

3. Verfahren nach Anspruch 1 oder 2, **dadurch gekennzeichnet, dass** vor, während und/oder nach dem Aufbringen der mindestens einen Nitrifikationsinhibitor enthaltenden Lösung oder Suspension das Mineraldüngemittel mit einem Antibackmittel und/oder Versiegelungsmittel behandelt wird.

4. Verfahren nach Anspruch 3, **dadurch gekennzeichnet, dass** nach dem Aufbringen der Lösung oder Suspension ein Antibackmittel und/oder Versiegelungsmittel mit einem Schmelzpunkt im Bereich von 50 bis 130°C in geschmolzener Form auf das Mineraldüngemittel aufgebracht wird.

5. Verfahren nach einem der Ansprüche 1 bis 4, **dadurch gekennzeichnet, dass** das Aufbringen ein Aufsprühen ist.

6. Verfahren nach einem der Ansprüche 1 bis 5, **dadurch gekennzeichnet, dass** beim Aufbringen des Nitrifikationsinhibitors entstehende Abluft zur Rückgewinnung von Nitrifikationsinhibitor behandelt wird.

7. Verfahren nach einem der Ansprüche 1 bis 6, **dadurch gekennzeichnet, dass** der Nitrifikationsinhibitor 3,4-Dimethylpyrazol oder ein Phosphorsäureadditionssalz davon ist.

8. Verfahren nach einem der Ansprüche 1 bis 7, **dadurch gekennzeichnet, dass** die Temperatur des Mineraldüngemittels beim Aufbringen 87 bis 120°C beträgt.

## Claims

1. Method for producing mineral fertilizers in powder, prill, pellet or granule form, which comprise nitrification inhibitors, by applying a solution or suspension comprising at least one nitrification inhibitor of the general formula 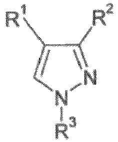 where
R¹ is a halogen atom or C₁₋₄ alkyl radical R² is a C₁₋₄ alkyl radical R³ is H or CH₂OH,
or an acid addition salt thereof to mineral fertilizer powder, prills, pellets or granules, where the solution or suspension contains not more than 20 wt% of the nitrification inhibitor or acid addition salt thereof, based on the overall solution or suspension, and the mineral fertilizer during the applying has a temperature in the range from 70 to 130°C, and the solution or suspension is applied in an amount such that the mineral fertilizer contains 0.01 to 1.5 wt% of the nitrification inhibitor or acid addition salt thereof, based on the mineral fertilizer before the applying.

2. Method according to Claim 1, **characterized in that** the solution or suspension further comprises a dye.

3. Method according to Claim 1 or 2, **characterized in that** before, during and/or after the applying of the solution or suspension comprising at least one nitrification inhibitor, the mineral fertilizer is treated with an anti-caking agent and/or sealing agent.

4. Method according to Claim 3, **characterized in that** after the applying of the solution or suspension, an anti-caking agent and/or sealing agent having a melting point in the range from 50 to 130°C is applied in melted form to the mineral fertilizer.

5. Method according to any of Claims 1 to 4, **characterized in that** the applying is a sprayed application.

6. Method according to any of Claims 1 to 5, **characterized in that** air emitted during the applying of the nitrification inhibitor is treated for recovery of nitrification inhibitor.

7. Method according to any of Claims 1 to 6, **characterized in that** the nitrification inhibitor is 3,4-dimethylpyrazole or a phosphoric acid addition salt thereof.

8. Method according to any of Claims 1 to 7, **characterized in that** the temperature of the mineral fertilizer during the applying is 87 to 120°C.

## Revendications

1. Procédé de fabrication d'engrais minéraux sous la forme de poudres, de comprimés, de produits compactés ou de granulats, qui contiennent des inhibiteurs de nitrification, par application d'une solution ou d'une suspension contenant au moins un inhibiteur de nitrification de formule générale 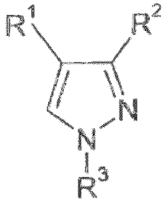 dans laquelle
R¹ signifie un atome d'halogène ou un radical alkyle en C₁₋₄,
R² signifie un radical alkyle en C₁₋₄,
R³ signifie H ou CH₂OH,
ou un sel d'addition acide de celui-ci sur des poudres, des comprimés, des produits compactés ou des granulats d'engrais minéraux, la solution ou la suspension contenant au plus 20 % en poids de l'inhibiteur de nitrification ou du sel d'addition acide de celui-ci, par rapport à la solution ou suspension totale, et l'engrais minéral présentant lors de l'application une température dans la plage allant de 70 à 130 °C, et la solution ou suspension étant appliquée en une quantité telle que l'engrais minéral contienne 0,01 à 1,5 % en poids de l'inhibiteur de nitrification ou du sel d'addition acide de celui-ci, par rapport à l'engrais minéral avant l'application.

2. Procédé selon la revendication 1, **caractérisé en ce que** la solution ou suspension contient en outre un colorant.

3. Procédé selon la revendication 1 ou 2, **caractérisé en ce que** l'engrais minéral est traité avec un agent antiagglomérant et/ou un agent isolant avant, pendant et/ou après l'application de la solution ou suspension contenant au moins un inhibiteur de nitrification.

4. Procédé selon la revendication 3, **caractérisé en ce qu'**un agent antiagglomérant et/ou un agent isolant ayant un point de fusion dans la plage allant de 50 à 130 °C est appliqué sous forme fondue sur l'engrais minéral après l'application de la solution ou suspension.

5. Procédé selon l'une quelconque des revendications 1 à 4, **caractérisé en ce que** l'application est une pulvérisation.

6. Procédé selon l'une quelconque des revendications 1 à 5, **caractérisé en ce que** l'air résiduaire formé lors de l'application de l'inhibiteur de nitrification est traité pour récupérer l'inhibiteur de nitrification.

7. Procédé selon l'une quelconque des revendications 1 à 6, **caractérisé en ce que** l'inhibiteur de nitrification est le 3,4-diméthylpyrazole ou un sel d'addition d'acide phosphorique de celui-ci.

8. Procédé selon l'une quelconque des revendications 1 à 7, **caractérisé en ce que** la température de l'engrais minéral lors de l'application est de 87 à 120 °C.
